# EUROPÄISCHE PATENTSCHRIFT

(11) **EP 0 806 765 B1**
(45) Veröffentlichungstag und Bekanntmachung des Hinweises auf die Patenterteilung: **25.06.2003**
(21) Anmeldenummer: 97106959.6
(22) Anmeldetag: 26.04.1997
(51) Int. Cl.: G11B 5/56

(54) **Haltevorrichtung für Magnetkopf**
Magnetic head holding device
Dispositif de support de tête magnétique

(30) Priorität: 08.05.1996 DE 19618433
(43) Veröffentlichungstag der Anmeldung: 12.11.1997
(73) Patentinhaber: DEUTSCHE THOMSON-BRANDT GMBH, 78048 Villingen-Schwenningen (DE)
(72) Erfinder: Weisser, Fritz, 78112 St. Georgen (DE); Oldermann, Klaus, 78052 Villingen-Schwenningen (DE); Lauble, Erhard, 78112 St. Georgen (DE)

(56) Entgegenhaltungen:
- DE-A- 4 105 762
- GB-A- 2 090 040
- PATENT ABSTRACTS OF JAPAN vol. 016, no. 418 (P-1413), 3.September 1992 & JP 04 139612 A (MATSUSHITA ELECTRIC IND CO LTD), 13.Mai 1992,
- PATENT ABSTRACTS OF JAPAN vol. 096, no. 011, 29.November 1996 & JP 08 180347 A (SANYO ELECTRIC CO LTD), 12.Juli 1996,

## Beschreibung

Die Erfindung betrifft eine Haltevorrichtung für einen Audio-Steuer-Kopf eines Videorecorders nach dem Oberbegriff des Anspruchs 1.

Bei Videorecordern nach dem VHS-System erfolgt die Aufzeichnung von Video-Signalen und Stereo-Audio-Signalen in Schrägspuren mittels eines rotierenden Video-Kopfes und die Aufzeichnung von Steuer-Signalen und Mono-Audio-Signalen in Längsspuren mittels eines stationären Audio-Steuer-Kopfes.

Um Kompatibilität zwischen Videorecordern und bespielten Videobändern untereinander sicherzustellen, ist es erforderlich, den Audio-Steuer-Kopf bezüglich der Auszeichnungsspur des Videobandes zu justieren. Dazu dienen Bandführungen vor und hinter dem Audio-Steuer-Kopf und Schrauben und Spiralfedern, welche die Einstellung der Position einer Kopfträgerplatte zu einer Grundplatte und den Bandführungen ermöglichen und die Einstellposition fixieren. Einstellbar sind der Neigungswinkel des Audio-Steuer-Kopfes zur Capstanwelle (Tiltwinkel), der Neigungswinkel der Kopfspalte des Audio-Steuer-Kopfes zur Längsachse des Videobandes (Azimutwinkel), die relative Höhe des Audio-Steuer-Kopfes zur Bandkante des Videobandes und gegebenenfalls der sogenannte X-Abstand. Die bekannten Haltevorrichtungen besitzen eine Vielzahl von Einzelteilen und erfordern wegen der Vielzahl von Einstellelementen einen verhältnismäßig hohen Zeitaufwand zur Durchführung der Einstellungen, da sich die Einstellmaßnahmen teilweise gegenseitig beeinflussen.

Aus der DE 41 05 762 A1 ist eine Haltevorrichtung bekannt, bei der weder die Einstellungen zur X-Abstand- und Höhenjustierung die Einstellungen zur Tiltwinkel- und Azimutwinkeljustierung noch die Einstellungen zur Tiltwinkel- und Azimutwinkeljustierung die Einstellungen zur X-Abstand- und Höhenjustierung beeinflussen. Dafür ist jedoch bei dieser Haltevorrichtung der konstruktive Aufwand relativ groß.

Der Erfindung liegt die Aufgabe zugrunde, eine Haltevorrichtung für einen Audio-Steuer-Kopf eines Videorecorders zu schaffen, welche mit weniger Einstellelementen auskommt und eine zeitsparende Einstellung weitgehend ohne gegenseitige Beeinflussung der Einstellmaßnahmen ermöglicht.

Diese Aufgabe wird bei einer Haltevorrichtung nach dem Oberbegriff des Anspruchs 1 durch die im Kennzeichen angegebenen Merkmale gelöst. Weiterbildungen und vorteilhafte Ausgestaltungen der Erfindung ergeben sich aus den Unteransprüchen.

Da der Audio-Steuer-Kopf mit seiner Unterkante auf einer Auflage aufliegt, die gleichzeitig als Bandführung der Unterkante des Videobandes dient, entfällt die sonst notwendige Höhenführung. Gleichzeitig entfällt auch die Notwendigkeit, den Audio-Steuer-Kopf in der Höhe auf das Videoband einzustellen, da Kopf und Band dieselbe Höhenreferenz nutzen.

Durch die Anschläge, gegen die die Kopfträgerplatte in Richtung der Längsachse des Videobandes durch Federkraft gedrückt ist, ergibt sich auch eine Referenz für den X-Abstand. Geringe fertigungsbedingte X-Einstellungs-Toleranzen können bei normalen Geräten elektronisch ausgeglichen werden.

Somit ist nur noch die Einstellung des Neigungswinkels zur Capstanwelle und des Neigungswinkels der Kopfspalte des Audio-Steuer-Kopfes zur Längsachse des Videobandes nötig. Da hierbei der Audio-Steuer-Kopf um seinen Auflagepunkt auf der Auflage gekippt wird, sind die beiden Einstellmaßnahmen, die ja rechtwinklig zueinander erfolgen, ohne gegenseitige Beeinflussung. Die Zeitersparnis bei der Einstellung ergibt sich einerseits daraus, daß nur noch zwei Einstellelemente bedient werden müssen und andererseits daraus, daß keine Beeinflussung stattfindet, so daß jeder Einstellvorgang nur einmal durchgeführt werden muß.

Vorzugsweise besteht die Kopfträgerplatte aus einem federelastischen Material. Die Kopfträgerplatte ist einerseits mittels eines Halters und einer Schraube gegen die Grundplatte verspannt und andererseits mittels der Auflage und einer weiteren Schraube auf Abstand zur Grundplatte gehalten. Die Schrauben dienen zusätzlich zur Einstellung der Kopfträgerplatte, indem mittels einer senkrecht zur Capstanwelle und zur Längsachse des Videobandes liegenden Schraube der Neigungswinkel zur Capstanwelle und mittels einer in Richtung der Längsachse des Videobandes liegenden Schraube der Neigungswinkel zur Längsachse des Videobandes einstellbar ist.

Die Kopfträgerplatte wird also mittels zwei Elementen an die Grundplatte angedrückt und mittels zwei weiterer Elemente auf Abstand gehalten. Dadurch ist eine definierte Position gegeben. Die Ausgestaltung der Kopfträgerplatte aus einem federelastischen Material macht die Verwendung separater Federn, wie der Stand der Technik vorsieht, überflüssig.

Die Lage der Schrauben ist bezüglich der Auflage so gewählt, daß gedachte Verbindungslinien zwischen der Auflage und den Schrauben einen rechten Winkel einschließen. Dadurch werden die Einstellungen der Neigungswinkel nicht gegenseitig beeinflußt.

Durch eine Aussparung in der Kopfträgerplatte kann eine Federzunge mit gegenüber der Kopfträgerplatte schräger Anschlagfläche ausgebildet sein, gegen die der Halter drückt. Dabei werden auf die Kopfträgerplatte gleichzeitig Kraftkomponenten gegen die Anschläge als auch gegen die Grundplatte ausgeübt. Es gelingt auf diese Weise, mit derselben Feder zwei Kraftkomponenten zu erzeugen.

Eine Weiterbildungen sieht vor, daß einer der Anschläge verstellbar ist. Der verstellbare Anschlag kann dabei eine Exzenterschraube aufweisen. Diese Maßnahme ermöglicht es, auch eine grobe Einstellung des X-Abstands durchzuführen, was bei Geräten mit Einzelbildschaltung erforderlich ist.

Nachfolgend wird die Erfindung anhand zweier Ausführungsbeispiele erläutert, die in der Zeichnung dargestellt sind.

In der Zeichnung zeigen:
- Fig. 1: eine Draufsicht auf eine Haltevorrichtung einer ersten Ausführung sowie Schnitte durch die Haltevorrichtung und
- Fig. 2: eine Draufsicht auf eine Haltevorrichtung einer zweiten Ausführung sowie Schnitte durch die Haltevorrichtung.

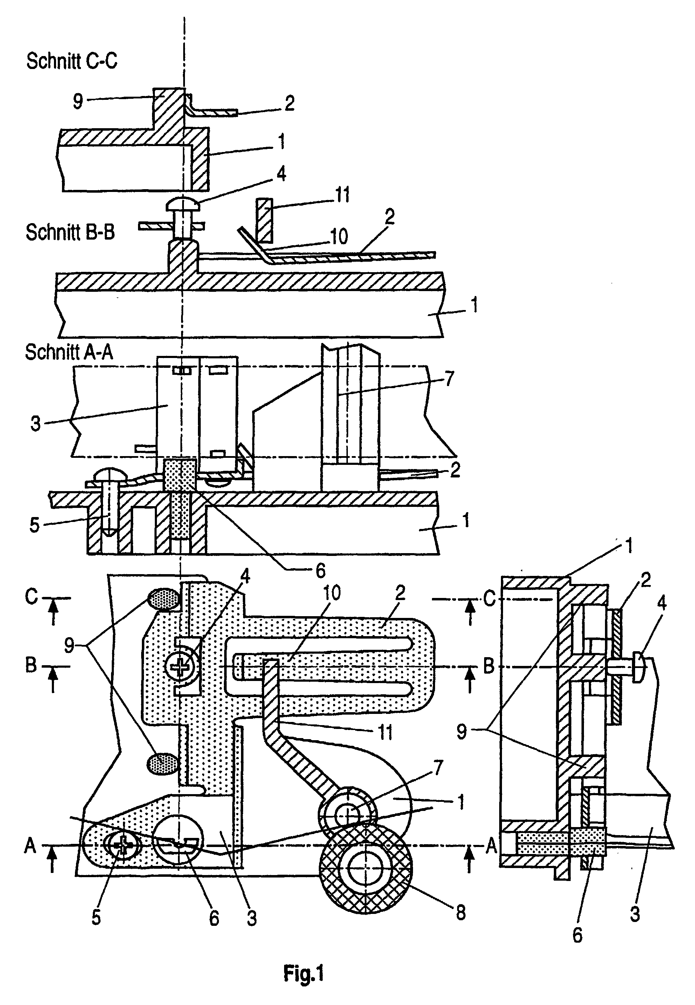

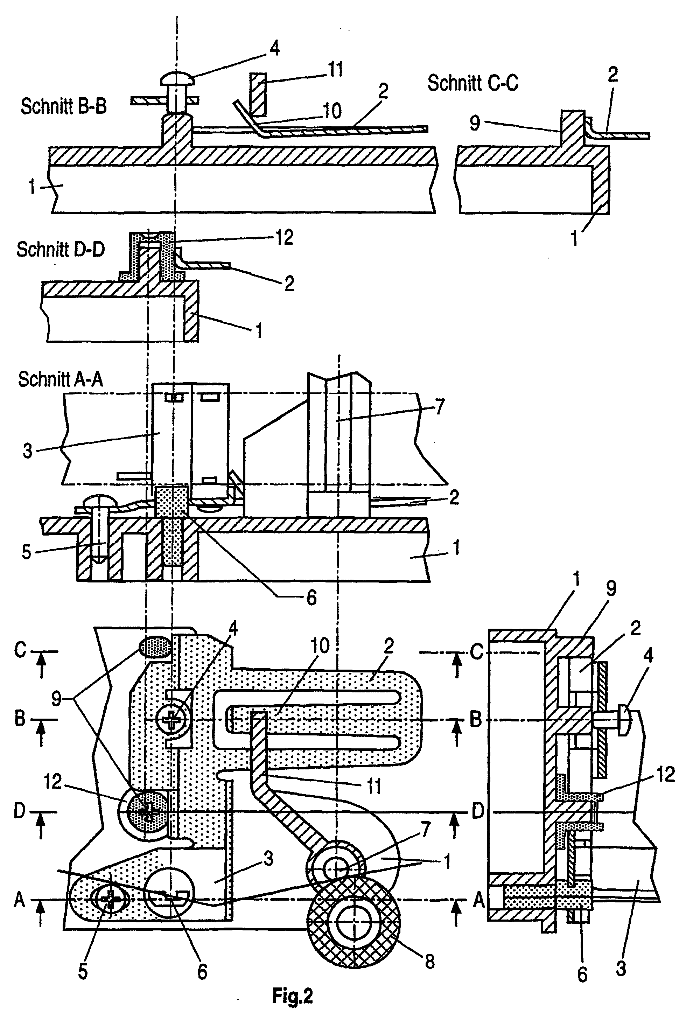

Die in der Zeichnung dargestellten Haltevorrichtung umfaßt eine Grundplatte 1, auf der eine Kopfträgerplatte 2 einstellbar befestigt ist. Auf der Grundplatte 1 sind ferner eine Capstanwelle 7 mit einer Andruckrolle 8 gelagert und ein Halter 11 sowie eine Auflage 6 und Anschläge befestigt. Bei der in Fig. 1 gezeigten Ausführung handelt es sich um zwei feste Anschläge 9, während die Ausführungen gemäß Fig. 2 einen festen Anschlag 9 und einen verstellbare Anschlag 12 umfaßt. Die Kopfträgerplatte 2 trägt einen Audio-Steuer-Kopf 3. In einem von den Anschlägen 9; 12 abweisenden Bereich besitzt die Kopfträgerplatte 2 einen Ansatz, in dem durch eine Aussparung eine Federzunge 10 gebildet ist. Die Federzunge 10 ist an ihrem zu den Anschlägen 9; 12 weisenden Ende abgeschrägt und steht in Eingriff mit dem Halter 11.

Im Bereich zwischen den Anschlägen 9; 12 wird die Kopfträgerplatte 2 von einer Schraube 4 durchgriffen. Die Schraube 4 ist in einem Gewinde der Kopfträgerplatte 2 drehbar gelagert und stützt sich auf einem Vorsprung der Grundplatte 1 ab. Eine weitere Schraube 5 durchgreift mit radialem Spiel die Kopfträgerplatte 2 und ist in einem Gewinde der Grundplatte 1 gelagert.

Der Halter 11 drückt auf das abgeschrägte Ende der Federzunge 10 und übt so Kraftkomponenten aus, die einerseits die Kopfträgerplatte 2 gegen die Anschläge 9; 12 und andererseits gegen die Auflage 6 und über die Schraube 4 gegen den Vorsprung auf der Grundplatte 1 drücken. Auch die Schraube 5 übt mit ihrem Schraubenkopf eine Kraftkomponente aus, die die Kopfträgerplatte 2 gegen die Grundplatte 1 drückt. Die Kopfträgerplatte 2 ist so bezüglich der Anschläge 9; 12 und der Auflage 6 eindeutig positioniert.

Die Angriffspunkte der Schrauben 4 und 5 an der Kopfträgerplatte 2 liegen bezüglich der Auflage 6 so, daß gedachte Verbindungslinien zwischen der Schraube 4 und der Auflage 6 einerseits und der Schraube 5 und der Auflage 6 andererseits einen rechten Winkel einschließen. Dadurch schwenkt bei Betätigen der Schraube 4 die Kopfträgerplatte 2 mit dem Audio-Steuer-Kopf 3 um eine Achse, die der Verbindungslinie zwischen der Schraube 5 und der Auflage 6 entspricht und bei Betätigen der Schraube 5 schwenkt die Kopfträgerplatte 2 mit dem Audio-Steuer-Kopf 3 um eine Achse, die der Verbindungslinie zwischen der Schraube 4 und der Auflage 6 entspricht. Da somit die Schwenkachsen ebenfalls im rechten Winkel zueinander liegen, beeinflussen sich die Einstellungen gegenseitig nicht oder liegen zumindest innerhalb des zulässigen Toleranzbereichs.

Bei der Einstellung wird zunächst mittels der Schraube 4 der Neigungswinkel des Audio-Steuer-Kopfes 3 zur Capstanwelle 7, als Tiltwinkel bezeichnet, eingestellt, damit das mit seiner Unterkante an der Auflage 6 anliegende Videoband von der Capstanwelle 7 parallel an allen Spalten der Teilköpfe des Audio-Steuer-Kopfes 3 entlangläuft und somit die derselben Spur zu geordneten Köpfe auch in derselben Spur liegen. Anschließend wird mittels der Schraube 5 der Neigungswinkel der Kopfspalte des Audio-Steuer-Kopfes 3 zur Bandachse, als Azimutwinkel bezeichnet, eingestellt. Damit ist der Einstellvorgang abgeschlossen.

Bei der Ausführung gemäß Fig. 2 kann zusätzlich mittels des verstellbaren Anschlags 12 noch der X-Abstand eingestellt werden, um auch bei Geräten mit Einzelbildschaltung eine X-Abstands-Einstellung vornehmen zu können.

## Patentansprüche

1. Haltevorrichtung für einen Audio-Steuer-Kopf (3) eines Videorecorders mit einer Capstanwelle (7), bestehend aus einer Grundplatte (1) und einer Kopfträgerplatte (2), die gegenüber der Grundplatte (1) einstellbar ist und den Audio-Steuer-Kopf (3) aufnimmt, **dadurch gekennzeichnet, dass** die Kopfträgerplatte (2) in Richtung der Längsachse des Videobandes durch Federkraft gegen Anschläge (9; 12) gedrückt ist, dass der Audio-Steuer-Kopf (3) mit seiner Unterkante auf einer Auflage (6) aufliegt, die gleichzeitig als Bandführung der Unterkante des Videobandes dient und dass die Kopfträgerplatte (2) im Neigungswinkel zur Capstanwelle (7) und im Neigungswinkel zur Längsachse des Videobandes senkrecht zueinander einstellbar ist.

2. Haltevorrichtung nach Anspruch 1, **dadurch gekennzeichnet, daß** die Kopfträgerplatte (2) aus einem federelastischen Material besteht, daß die Kopfträgerplatte (2) einerseits mittels eines Halters (11) und einer Schraube (5) gegen die Grundplatte (1) verspannt ist und andererseits mittels der Auflage (6) und einer weiteren Schraube (4) auf Abstand zur Grundplatte (1) gehalten ist und daß die Schrauben (4, 5) zusätzlich zur Einstellung der Kopfträgerplatte (2) dienen, indem mittels einer senkrecht zur Capstanwelle (7) und zur Längsachse des Videobandes liegenden Schraube (4) der Neigungswinkel zur Capstanwelle (7) und mittels einer in Richtung der Längsachse des Videobandes.liegenden Schraube (5) der Neigungswinkel zur Längsachse des Videobandes einstellbar ist.

3. Haltevorrichtung nach Anspruch 2, **dadurch gekennzeichnet, daß** durch eine Aussparung in der Kopfträgerplatte (2) eine Federzunge (10) mit gegenüber der Kopfträgerplatte (2) schräger Anschlagfläche ausgebildet ist, gegen die der Halter (11) drückt und auf die Kopfträgerplatte (2) gleichzeitig eine Kraftkomponente gegen die Anschläge (9; 12) als auch gegen die Grundplatte (1) ausübt.

4. Haltevorrichtung nach einem der Ansprüche 1 bis 3, **dadurch gekennzeichnet, daß** einer der Anschläge (12) verstellbar ist.

5. Haltevorrichtung nach Anspruch 4, **dadurch gekennzeichnet, daß** der verstellbare Anschlag (12) eine Exzenterschraube aufweist.

## Claims

1. Holding device for an audio control head (3) of a video recorder having a capstan shaft (7), comprising a baseplate (1) and a head carrier plate (2), which can be set with respect to the baseplate (1) and receives the audio control head (3),
**characterized in that**
the head carrier plate (2) is pressed in the direction of the longitudinal axis of the videotape by spring force against stops (9; 12), **in that** the audio control head (3) bears with its lower edge on a support (6) which simultaneously serves as tape guide of the lower edge of the videotape, and **in that** the head carrier plate (2) can be set in terms of the angle of inclination with respect to the capstan shaft (7) and in terms of the angle of inclination with respect to the longitudinal axis of the videotape perpendicular to one another.

2. Holding device according to Claim 1, **characterized in that** the head carrier plate (2) is composed of a resilient material, **in that** the head carrier plate (2) is, on the one hand, braced against the baseplate (1) by means of a holder (11) and a screw (5) and, on the other hand, is held at a distance from the baseplate (1) by means of the support (6) and a further screw (4), and **in that** the screws (4, 5) are additionally used for the setting of the head carrier plate (2) **in that** the angle of inclination with respect to the capstan shaft (7) can be set by means of a screw (4) which is perpendicular to the capstan shaft (7) and to the longitudinal axis of the videotape, and the angle of inclination with respect to the longitudinal axis of the videotape can be set by means of a screw (5) which is situated in the direction of the longitudinal axis of the videotape.

3. Holding device according to Claim 2, **characterized in that** a spring tongue (10) having a slanted stop surface compared with the head carrier plate (2) is formed through a recess in the head carrier plate (2), against which stop surface the holder (11) presses and simultaneously exerts a force component against the stops (9; 12) and against the baseplate (1) on the head carrier plate (2).

4. Holding device according to one of Claims 1 to 3, **characterized in that** one of the stops (12) is adjustable.

5. Holding device according to Claim 4, **characterized in that** the adjustable stop (12) has an eccentric screw.

## Revendications

1. Dispositif de support de tête de commande audio (3) de magnétoscope doté d'un cabestan (7), constitué d'un socle (1) et d'une plaque de support de tête (2) réglable par rapport au socle (1) qui abrite la tête de commande audio (3), **caractérisé en ce que** la plaque de support de tête (2) est pressée contre des butées (9; 12) par un effet de ressort en direction de l'axe longitudinal de la bande vidéo, le bord inférieur de la tête de commande audio (3) repose sur un appui (6) qui sert également de guide ruban au bord inférieur de la bande vidéo et les angles de déclivité de la plaque de support audio (2) par rapport au cabestan (7) et à l'axe longitudinal de la bande vidéo peuvent être réglés de façon perpendiculaire l'un par rapport à l'autre.

2. Dispositif de support selon la revendication 1, **caractérisé en ce que** la plaque de support de tête (2) est réalisée dans un matériau à flexibilité de ressort, la plaque de support de tête (2) est, d'un côté, étayée contre le socle (1) au moyen d'un support (11) et d'une vis (5) et, d'un autre côté, écartée du socle (1) au moyen de l'appui (6) et d'une autre vis (4) et les vis (4, 5) servent également au réglage de la plaque de support de tête (2), dans la mesure où une vis (4) placée verticalement par rapport au cabestan (7) et à l'axe longitudinal de la bande vidéo permet de régler l'angle de déclivité par rapport au cabestan (7) et une vis (5) placée en direction de l'axe longitudinal de la bande vidéo permet de régler l'angle de déclivité par rapport à l'axe longitudinal de la bande vidéo.

3. Dispositif de support selon la revendication 2, **caractérisé en ce qu'**un évidement dans la plaque de support de tête (2) permet de faire passer une lame flexible (10) à la surface de butée oblique par rapport à la plaque de support de tête (2), contre laquelle le support (11) est pressé et **en ce que**, sur la plaque de support de tête (2), des composantes de force sont pressées simultanément contre les butées (9; 12) et contre le socle (1).

4. Dispositif de support selon l'une des revendications 1 à 3, **caractérisé en ce qu'**une des butées (12) est réglable.

5. Dispositif de support selon la revendication 4, **caractérisé en ce que** la butée réglable (12) présente une vis excentrique.
